(19) Europäisches Patentamt
European Patent Office
Office européen des brevets

(11) **EP 2 187 341 A1**

(12) **EUROPEAN PATENT APPLICATION**

(43) Date of publication:
**19.05.2010 Bulletin 2010/20**

(51) Int Cl.:
*G06K 9/64* *(2006.01)*     *G06K 9/00* *(2006.01)*

(21) Application number: **08380314.8**

(22) Date of filing: **12.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Fundación Robotiker**
**E-48170 Zamudio (Vizcaya) (ES)**

(72) Inventors:
• **Picon Ruiz, Artzai**
**48170 Zamudio (Vizcaya) (ES)**

• **Ghita, Ovidiu**
**48170 Zamudio (Vizcaya) (ES)**
• **Whelan, Paul F.**
**48170 Zamudio (Vizcaya) (ES)**
• **Iriondo, Pedro Maria**
**48170 Zamudio (Vizcaya) (ES)**

(74) Representative: **Carpintero Lopez, Francisco et al**
**Herrero & Asociados, S.L.**
**Alcalá 35**
**28014 Madrid (ES)**

(54) **Method for modelling electromagnetic spectra**

(57)     The invention relates to a methodology for correcting the problems of high dimensionality of data by means of separating the spectrum into different fuzzy subsets with respective membership functions $M_{fij}$ and spectral feature extraction on the basis of the intensity or Energy of each of them. The sensitivity that each fuzzy subset represents for a spectral area is similar to that obtained by the human visual system, equivalent to that acquired by a multispectral eye with a number of cone types equal to the number of defined fuzzy subsets. The representation of the spectrum on the basis of the Energy allows modelling the parameters defining the absorptions in that spectral area, which allows generating a universal feature vector defining said spectrum, reducing the size of the stored information and reducing the computational cost without the limitations (need for training, physical meaning of the variables,...) of classic methods.

FIG. 1

**Description**

Technical Field of the Invention

The invention which is described has its field of application in processing hyperspectral images corresponding to electromagnetic radiations emitted/absorbed by a given element or substance, which can be applied for identifying materials, satellite images, very high resolution images, multichannel images, image fusion,... and particularly, for example, for discriminating metals in the recycling process.

Background of the Invention

There currently exist different techniques for obtaining hyperspectral images, such as for example optical spectrographs which allow, by means of using the physical diffraction phenomenon, obtaining the spectrum of each point of a line of the target image which is captured. This line is refracted upon passing through a diffraction grating or prism with an angle depending on its wavelength and the dispersed ray is detected as a line on the vertical Z axis of a chamber recording the intensity in the different wavelengths A for each point of the previous line, each point being represented on the horizontal X axis of the chamber.

By means of translation of the point of the object to be captured, hyperspectral images characterised by a three-dimensional cube can be obtained, containing in the plane formed by the X and Y axes spatial information about the position of the point and in each of the elements of the Z axis the information associated to the wavelength A. These images contain information which is not seen with the naked human eye, and each spatial point thereof is defined by the electromagnetic spectrum associated thereto. This not only gives information about the aspect of these images in the different wavelengths (cutting plane at a Z axis value) which can even be invisible, but also gives information about the different absorption bands and the aspect of the spectrum associated to each point (cutting line upon fixing the X and Y axes). The information contained in this hyperspectral image is enormous, especially for a high number of bands, requiring high capacity and high processing speed equipment and efficient algorithms for processing the data which it contains.

By selecting a specific point in the plane defined by the XY axes, the electromagnetic spectrum associated to that point is given by the set of values contained in the Z axis associated to each of the wavelengths of the spectrum. Viewed mathematically, an electromagnetic spectrum can be defined by means of a normalised feature vector ($L_n$) the elements of which are each of the emission or absorption values of each of the wavelengths, expressed as

$$\mathbf{L}_n = \left\{ L_n\left(\lambda_1\right), L_n\left(\lambda_2\right),..., \ L_n\left(\lambda_N\right)\right\}^T \quad \text{(equation 1)}$$

In equation 1, N is the total number of wavelengths ($\lambda_1, \lambda_2,..., \lambda_N$) contained in the image and $L_n(\lambda_i)$ denotes the intensity value of element i, i = 1, 2,..., N of the normalised feature vector ($L_n$); i.e., $L_n(\lambda_i)$ is the intensity corresponding to the wavelength $\lambda_i$ associated to the selected point in the hyperspectral image which gives the spectrum.

If an automatic classifier algorithm for classifying the substance or element that this electromagnetic spectrum represents is to be created, the large amount of redundant data contained in the hyperspectral image causes several problems:

- The complexity of the classifier is exponentially increased in relation to the number of discriminant variables (each of the wavelengths of the spectrum).
- A much larger number of examples is required to train the classifier algorithm.
- The processing speed is lower with a larger number of data.

There exist techniques based on reducing the feature set given by the mathematical vector defined in equation 1 which represents the spectrum of a material. However the most frequently used feature reduction techniques do not maintain the physical meaning of the variables, or the latter must be chosen on the basis of previous expert knowledge, on the basis of known discriminant variables of the materials to be classified, or, on occasions, the features selected by these methods vary depending on the materials to be classified, causing the addition of new material to change the extracted features.

Due to the Hughes phenomenon ["On the Mean Accuracy Of Statistical Pattern Recognizers", G.F. Hughes, IEEE Transactions on Information Theory (14-1 55-63), 1968], the high dimensionality and redundancy in the actual hyperspectral images causes the use of all the spectral bands for classifying and calculating the differences between spectra to not be optimal.

Some examples of classic techniques which are applied to achieve decorrelation of the information contained in the spectral bands are the Principal Components Analysis (PCA) technique ["Independent component analysis-based dimensionality reduction with applications in hyperspectral image analysis", J. Wang, and C.I. Chang, IEEE Transactions on Geoscience and Remote Sensing, vol. 44, no. 6, pp. 1586-1600, 2006] and Lineal Discriminant Analysis (LDA) technique ["Modified Fisher's Linear Discriminant Analysis for Hyperspectral Imagery", Qian Du, Geoscience and Remote Sensing Letters, IEEE, vol. 4 Issue 4, 503-507,2007] or combinations of these and other methods ["Mixed principal-component-analysis/independent-component-analysis transform for hyperspectral image analysis", J. Wen Chai, J. Wang, and C.I. Chang, Optical Engineering, vol. 46, 077006, Image Processing, 2007].

In the case of hyperspectral images, the techniques based on feature extraction allow efficiently extracting from a data set new features having a high discriminatory power. However, the features extracted in this way do not represent specific physical variables and cannot be easily interpreted. Furthermore, the extracted discriminant features are dependent on the training data set, therefore they have variations in the event that some element or new class is added to the sample or if they progressively change with time. This unsuitability is reflected in several works [an example: in "Limitations of subspace LDA in hyperspectral target recognition applications", S. Prasad and L.M. Bruce, IEEE Geoscience and Remote Sensing Symposium, IGARSS, 2007].

To reduce the features of the spectrum without harming the interpretability of the reduced features vector, other existing methodologies attempt to select the most relevant features of the spectrum. Within this group, there are algorithms based on expert systems, which locate and characterise the different absorption bands which allow differentiating the different materials on the basis of previously tabulated data. Nevertheless, this has the drawback that to include new materials, the latter have to be tabulated manually.

The methodologies based on prior knowledge of the classes to be analysed allow locating and quantifying previously known absorption bands which allow identifying those classes. However, they have the same drawbacks as the previous ones, since they require a *priori* knowledge of the classes to be modelled. Furthermore, incorporating new classes to the system causes the detected and modelled absorption bands to be unsuitable for discrimination thereof.

For that reason, other applicable methodologies are those that achieve selecting a feature subset maximising the classification or separability of the sample.

Automatic feature selection methodologies offer better results in the classification without compromising the physical meaning of the variables used, but they also depend on the classes to be modelled and can eliminate variables which, although they do not have discriminatory power for the classes studied, are crucial in the discrimination when new classes are added. Another of the drawbacks of these methods is that only different bands of the spectrum are selected, those features that could be discriminant in the classification are not selected.

Due to all these limitations, it is much more efficient to choose a feature set fulfilling the following conditions:

- Reducing the space of the original features
- Having a suitable discriminatory power and being supported by a physical base.
- Maintaining the physical meaning of the variables.
- Not depending on prior training so that they do not vary in their definition when new classes are added to the system or existing classes are modified.
- Including the advantages of the methods based on locating absorption bands without requiring prior knowledge of the classes to be modelled.
- Being generic features, not depending on the type of application or on the training set.

The invention which is described below allows extracting discriminant features in hyperspectral pixels meeting the previous requirements and is based on an adaptation of the concept of fuzzy sets defined by Zadeh in the formulation of his fuzzy logic theory ["Fuzzy sets", L.A. Zadeh, Information and Control, vol. 8, pp. 338-353, 1965].

Description of the Invention

The present invention proposes a methodology which allows modelling the electromagnetic spectrum of any substance for the purpose of optimizing the capacity to discriminate and classify these spectra without the limitations of the known methods which have been previously discussed.

The proposed methodology imitates the form of perception of the human eye, establishing a correspondence between fuzzy subsets with "virtual cones" which, in a way similar to the human eye, represent the sensitivity to a certain area of the light spectrum, but including frequency areas which the human eye does not see. Spectral feature extraction is optimally carried out here, bio-inspired in the human visual system; the extracted discriminant features extracted by means of this methodology would correspond to those acquired by a "multispectral eye" with a number of cone types equal to the number of defined fuzzy subsets.

One aspect of the invention particularly relates to a method for modelling electromagnetic spectra wherein, for classifying a given material emitting/absorbing an electromagnetic spectrum, giving rise to a hyperspectral image containing a number N of wavelengths ($\lambda_1$, $\lambda_2$,..., $\lambda_N$) and which can be defined by means of a normalised feature vector ($L_n$) of N elements, $L_n(\lambda_i)$ according to equation 1, a final feature vector (L) is obtained which characterises the hyperspectral image by means of hyperspectral pixels defined by a lower number of elements than that of the normalised feature vector ($L_n$).

More specifically, the proposed modelling method comprises the following steps:

i) Dividing the electromagnetic spectrum into at least one collection $L_{Dj}$ of a number $K \leq N$ of fuzzy subsets, a grade of membership to at least one of the fuzzy subsets determined by a membership function ($Mf_{ij}$) associated to a central wavelength ($\lambda_{Cij}$) and to a spacing parameter $D_j$, j = 1, 2,..., P corresponding to each wavelength ($\lambda_i$), i = 1, 2,..., N, $P \geq 1$ being a total number of collections of fuzzy subsets.

The grade of membership is defined as in the Zadeh's fuzzy extension for set theory: according to the Zadeh's theory, an element does not belong or not belong to a set, but rather it has a grade of membership to a fuzzy subset expressed in the interval [0,1], the full unit indicating membership or belonging to that subset and the value zero indicating the non-belonging thereto.

The membership function ($Mf_{ij}$) corresponds with a generic function which is associated to a central wavelength ($\lambda_{Cij}$) and to a spacing parameter $D_j$ $Mf_{ij}$ is a function of the wavelength $\lambda$ and is normally symmetrical except at the ends and normally has a maximum at its central point $\lambda_{Cij}$. The definition of the membership function for the specific, but not exclusive cases, of triangular and Gaussian function is given respectively by the following expressions:

$$Mf_{ij}(\lambda) = \begin{cases} 1 - \left| \dfrac{\lambda - \lambda_{Cij}}{D_j} \right|, & \lambda_{Cij} - D_j < \lambda < \lambda_{Cij} + D_j \\ 0, & \text{rest of values of } \lambda \end{cases} \qquad \text{(equation 2a)}$$

$$Mf_{ij}(\lambda) = \left( \frac{1}{2\pi\sigma^2} \right)^{\frac{1}{2}} \cdot e^{-\frac{1}{2\sigma^2}(\lambda - \lambda_{Cij})^2} \qquad \text{(equation 2b)}$$

Equation 2a defines a membership function ($Mf_{ij}$) having a triangular shape with the maximum peak in the central wavelength ($\lambda_{Cij}$) and $D_j$ being the separation distance between two consecutive central wavelengths.

Equation 2b defines a Gaussian membership function ($Mf_{ij}$) with a mean equal to the central wavelength ($\lambda_{Cij}$) and variance $\sigma^2$, normally being $D_j = 2\cdot\sigma$.

Other types of membership functions such as trapezoidal, polynomial, etc., can also be applied.

When a plurality (P>1) of collections of fuzzy subsets is used, different membership functions can be used; for example, a collection corresponding to triangular functions calculated according to equation 2a for a given spacing parameter, another collection corresponding to Gaussian functions calculated according to equation 2b for another value (or with the same value) of the spacing parameter, etc. Likewise, another known type of membership functions could be used for determining the grade of membership in other collections of fuzzy subsets.

Thus, each point of the spectrum has associated thereto a grade of membership to each of the fuzzy subsets into which it is divided. In this way, a grade of membership for each subset which is determined by the value of the membership function associated to the subset at that point corresponds to each element $\lambda_i$.

Different collections of fuzzy subsets are generated by choosing different values for the spacing parameter $D_j$.

The value of the spacing parameter $D_j$ depends on the desired spectral resolution. The typical values of this parameter for cases of a single collection (P = 1) can range between 10 nm and 500 nm. The spacing parameter corresponding to the human eye would be 100 nm.

Depending on the position and size of the hyperspectral image corresponding to the electromagnetic spectrum, the fuzzy subsets thus described define different parts of the spectrum. Thus and depending on the wavelengths that they cover, large fuzzy sets corresponding to an high spacing parameter ($D_j$ in the 500 nm-1000 nm interval) can define the following spectral areas: "visible", "near infrared", "middle infrared",...; whereas sets having a smaller value of the spacing parameter ($D_j$ in the 10 nm-30 nm interval) define other more specific areas such as: "oranges", "yellows", "violets",.... For example, in the event of having a hyperspectral pixel with a range in the visible area, the selection of three fuzzy sets to define the same would be equivalent to taking the RGB image thereof ($D_j$ has an approximate value of 100 nm).

ii) For each fuzzy subset of each collection $L_{Dj}$, the following step of the proposed method is to determine an intensity value of the electromagnetic spectrum $S_{ij}$. An intensity or Energy of the electromagnetic spectrum is defined for each of the fuzzy subsets into which the spectrum is divided weighting the intensity value $L_n(\lambda_i)$ of each of the normalised elements of the spectrum with the membership function ($Mf_{ij}$) associated to each of the subsets. Thus, the Energy indicating the intensity of the spectrum in a certain fuzzy subset can generally be expressed for each of the membership functions as:

$$\text{S}_{ij} \; = \; \int\limits_{\lambda=\lambda_1}^{\lambda=\lambda_N} Mf_{ij}(\lambda) \cdot L_n(\lambda) \cdot d\lambda \qquad \text{(equation 3)}$$

Depending on the position and size of the corresponding membership function, the Energy $S_{ij}$, of the spectrum can measure concepts such as the intensity in the "visible", "near ultraviolet", or the intensity in the "red", "violet" tones,.... This way of perceiving the spectrum corresponds with the way the human eye perceives the visible spectrum, which only perceives three different types of colours weighting the signal perceived by the sensitivity of the cones.

In this way, the characterization of the hyperspectral image on the basis of the intensity or Energy of the different associated fuzzy spectra allows characterising the electromagnetic radiations of the given material more effectively than the normalised parameterisation of equation 1 because the presence of a certain absorption/emission is associated to the values of *Energy* of the fuzzy subsets, which allows creating a single and universal feature vector capable of defining the absorptions present in various materials without the need for prior training nor to be modified In addition, the concept of *Energy* of a certain area of the spectrum maintains the physical meaning of the variables since it represents the response of the spectrum in each of the different fuzzy sets, which represent in turn conceptual areas thereof. A high intensity of the spectrum for a fuzzy set, for example, in the area of the wavelength of the colour red, thus indicates high reflectivity of the material in the area of the "red" tones.

By applying equation 3 to each of the collections of fuzzy subsets, the *Energy* for each one present therein is extracted. The collections $L_{Dj}$ with a larger spacing parameter $D_j$ thus capture absorptions covering a larger range of frequencies, whereas the collections with a small spacing parameter capture the absorptions which are located in a smaller range of frequencies, which allows simultaneously capturing information relating to different frequencies.

iii) The following step is to build the single and universal feature vector for each collection $L_{Dj}$, made up of a number of elements K, $K \leq N$, which is the number of fuzzy subsets of the collection:

$$\text{L}_{Dj} \; = \; \left\{ S_{1j}, S_{2j}, ..., S_{Kj} \right\}^T \qquad \text{(equation 4)}$$

This feature vector, according to equation 4 and calculating according to equation 3 each element $S_{ij}$ giving the of Energy value of the spectrum in each subset $i = 1, 2,..., K$ of the collection associated to a parameter Dj, is associated or assigned to a hyperspectral pixel.

A hyperspectral pixel such as the vector containing the values of the Energy of each of the fuzzy subsets into which the spectrum has been divided can thus be represented, reducing the feature space used to K elements, K being the number of fuzzy subsets used in a collection

iv) Combining the feature vectors associated to all the existing collections (a single collection, $j = 1$, can be used), a final feature vector (L) is built the elements of which are the feature vectors ($L_{Dj}$) built for each collection $L_{Dj}$ in the previous step,

$$\text{L} \; = \; \left\{ \text{L}_{D_1}; \text{L}_{D_2}; ... \text{L}_{D_P} \right\} \qquad \text{(equation 5)}$$

In equation 5, P denotes the total number of collections of fuzzy subsets (one or more, depending on the type of application), $P \geq 1$.

v) Lastly, this final feature vector (L) is that which is used to model the electromagnetic spectrum assigning its features to the hyperspectral image.

**EP 2 187 341 A1**

The described methodology is applicable for characterising hyperspectral images regardless of the technique used for obtaining the images.

The described methodology uses the high correlation features between adjacent bands (wavelengths) to model the original spectrum and describe it depending on the behaviour in different fuzzy subsets (areas). By virtue of the high dimensionality of the data contained in the hyperspectral image and the discriminatory power of the absorption bands, the separation of the spectrum to be analysed into fuzzy subsets and feature extraction therefrom on the basis of the *Energy* in each of them, an efficient method for modelling spectra is obtained which allows meeting the desired requirements for the feature set, the features of which must describe said spectrum. The fact that this Energy is bio-inspired in the perceptive operation of the human eye causes this methodology to intrinsically acquire some of the discriminant properties that the human eye has acquired through evolution, achieving optimal spectral feature extraction.

The advantages of the invention, many of which are derived from that operation equivalent to that of a human eye but multispectral, can be herein summarised:

- The use of fuzzy subsets makes a separation of the spectrum into different areas using the correlation between adjacent bands, at the same time as it prevents abrupt separation between areas which would cause a separation of the spectrum based on the classic definition of set.

- The representation of the spectrum on the basis of the Energy of the spectrum in the different areas defined by the fuzzy subsets allows effectively and practically parameterising the parameters characterising the absorptions present in that area of the spectrum, which allows creating a universal feature vector. Its capacity for capturing relevant information relating to the absorption bands characterising a material automatically and without the need for prior knowledge thereof represents an improvement compared to previous methodologies [Clark, R.N. et al., "Mapping Minerals, Amorphous Materials, Environmental Materials, Vegetation, Water, Ice and Snow, and Other Materials: The USGS Tricorder Algorithm", Summaries of the Fifth Annual JPL Airborne Earth Science Workshop, January 23- 26, R.O. Green, Ed., JPL Publication 95-1, p.p. 39-40, 1995] which manually collected and parameterised the absorptions later tabulated in databases.

- It allows reducing of the size of the stored information about the spectrum since it intrinsically stores those features necessary for classification, the computational cost necessary for its calculation being much lower than that of other feature extraction/reduction methods.

- Given the universality of the modelling by means of the feature vector and the fact that it does not have variations in its extraction, it can be implemented hardware platforms by accelerating the extraction process in very high resolution spectra.

- Unlike what occurs with other feature extraction methods such PCA or LDA, the features extracted by this method do not lose their physical meaning. The concept of Energy associated to each of the subsets into which the spectrum is divided represents a degree of reflectivity in that set of the spectrum.

- Unlike what occurs with PCA or LDA, in which adding a new element in the classification changes the extracted variables, the present method does not require prior training to extract the fuzzy sets which are going to define the radiation of the material.

- It reduces the effect of the Hughes phenomenon by efficiently reducing the feature space. This is due to being based on the knowledge of the physical properties that the different spectra have and by making use of the discriminant capacity of the absorption bands and of the correlation between adjacent bands. The number of necessary training elements is thus reduced and the complexity of the classifier is thus simplified. This reduction allows extracting information about the spatial distribution of the different spectra which allows creating feature vectors which can be approached in terms of Hughes phenomenon and of complexity of the classifier.

Description of the Drawings

To complement the description being made and for the purpose of aiding to better understand the features of the invention according to a preferred practical embodiment thereof, a set of drawings is attached as an integral part of this description in which the following has been depicted with an illustrative and non-limiting character:

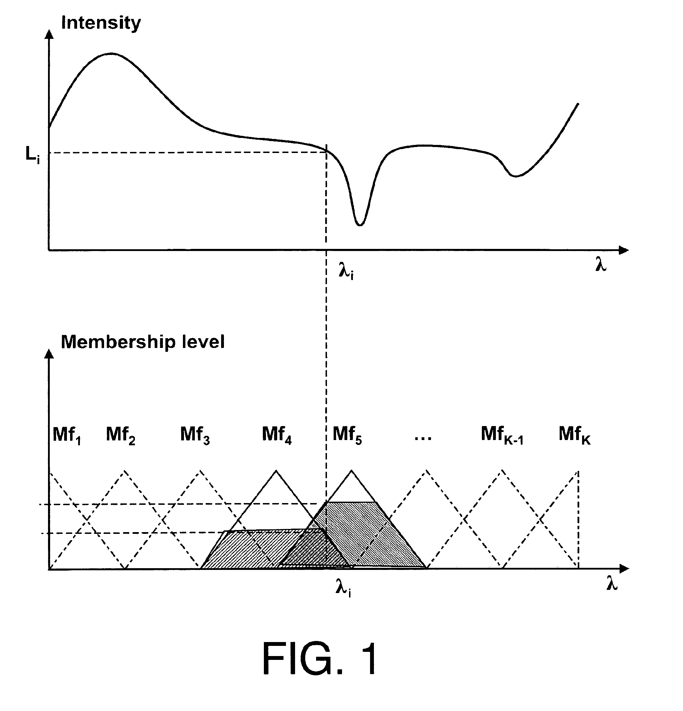

Figure 1 shows a graphic depiction (upper curve) of a hyperspectral pixel of a spectrum in function of its wavelength and the graphic depiction of the membership functions (lower graph) associated to the different fuzzy subsets into which the spectrum is divided, according to an embodiment of the invention, indicating that the wavelength belongs to the different fuzzy subsets.

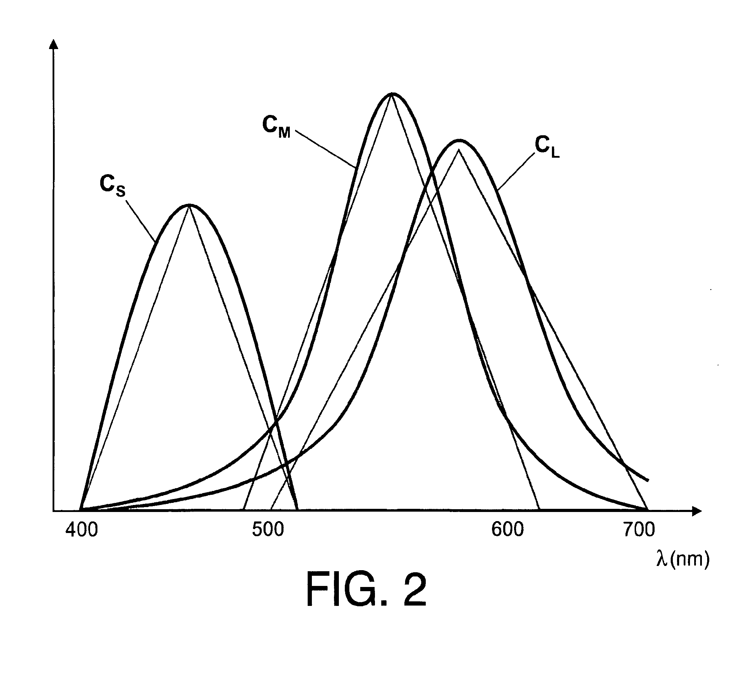

Figure 2 shows a graphic depiction (curves with bold-print line) of the sensitivity of the cones belonging to the human visual system in the frequency areas corresponding to red, green and blue of the light spectrum, together with a graphic depiction of triangular fuzzy subsets forming an approximation (shaded graphs) of those sensitivities in the respective wavelengths.

6

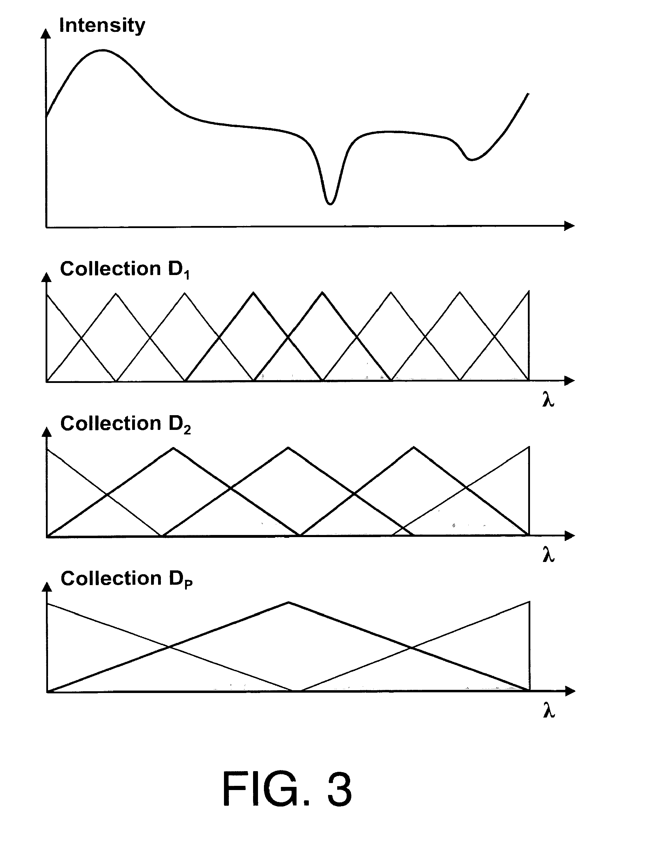

Figure 3 shows a graphic depiction (upper curve) of a hyperspectral pixel of a spectrum in function of its wavelength and the graphic depiction of the membership functions (lower graph) associated to the different fuzzy subsets into which the spectrum is divided, for different collections associated to different spacing parameters, according to another embodiment of the invention.

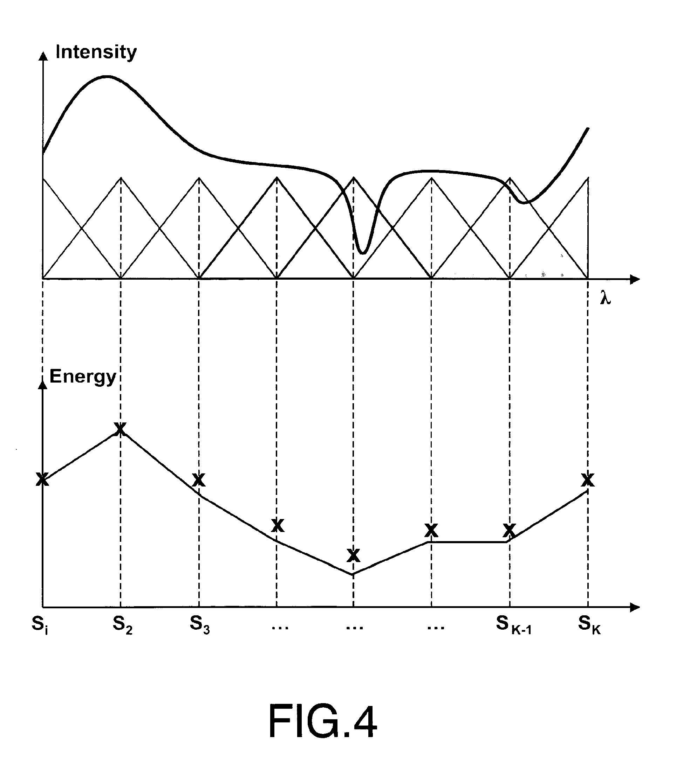

Figure 4 shows a graphic depiction (upper curve) of a hyperspectral pixel in function of its wavelength of a spectrum divided into fuzzy subsets and the graphic depiction of the Energy values (lower graph) in each of the different fuzzy subsets.

Preferred Embodiments of the Invention

Specifically a method is described for modelling spectra to classify substances and materials, which for example can be applied to distinguish metals and materials in recycling processes.

Assuming that the materials to be classified are not in an excited gaseous state, which would cause the emission or absorption in very specific bands of the spectrum, it can be stated that there exists a high correlation between adjacent bands. This correlation implies that the absorption bands defining the materials are not going to be represented only by a single band, but rather they are going to be defined by a set of bands adjacent to one another.

To model this correlation, associating each of the wavelengths of the spectrum with the neighboring wavelengths such that the values of the adjacent frequencies are taken into account, each of the elements of the spectrum is assigned to different areas into which it can be divided and, for the purpose of preventing nearby elements from being able to belong to two different groups, those areas are defined by means of K different fuzzy subsets, such as for example those depicted in Figure 1. A certain grade of membership to one or several fuzzy subsets determined by a membership function ($Mf_1$, $Mf_2$, $Mf_3$,..., $Mf_{k-1}$, $Mf_k$) thus corresponds to each wavelength $\lambda_i$ of the spectrum.

By thus defining the membership functions, the intensity value ($L_i$) associated to a wavelength ($\lambda_i$) has a membership level different from zero associated to the two adjacent fuzzy sets and a grade of membership equal to zero in the rest, as shown in Figure 1. It is thus determined that a certain wavelength belongs to each of the fuzzy sets of the spectrum with a certain range.

The division of the spectrum into equally spaced triangular fuzzy subsets as seen in Figure 1 allows generically associating a wavelength with a certain area of the spectrum as if it formed a type of multispectral eye, in which each defined fuzzy subset has sensitivity similar to what a sensitive human eye cone would have at those wavelengths. The proposed methodology for modelling electromagnetic spectra operates similarly to the way in which the human eye does, with the advantage that each of the triangles or areas covered by the membership functions defined is sensitive to wavelengths in which the human eye is not.

Figure 2 shows the absorption frequencies of the different cone types present in the human visual system: sensitivity curve of S-type cones of (Cs), sensitivity curve of M cones ($C_M$) and sensitivity curve of L cones ($C_L$). Figure 2 shows the comparison with the sensitivity in each wavelength area of the spectrum represented by different triangular fuzzy subsets.

Although for the sake of simplicity triangular membership functions are assumed, these can have other shapes, the triangular and the Gaussian shapes being the most common. And a spectrum can be generically represented by means of fuzzy sets representing generic shapes, which could be useful in specific applications.

In most cases, the division of the spectrum into a suitable number of fuzzy subsets allows an efficient feature reduction, suitably modelling the absorption bands present in the elements to be classified and maintaining a classification rate higher than that obtained by means of the Principal Components Analysis (PCA), without the drawbacks of the PCA.

On other occasions, it may occur that the defined fuzzy subsets are too large to be able to model small absorption bands which can be present in the materials, such as cases in which the materials to be classified are defined by a large amount of spectral variables (ultraspectral), or materials which are excited and emit or absorb in very specific bands of the spectrum.

For these cases, a multi-frequency definition of the fuzzy sets determining each of the areas of the spectrum is proposed. To that end, the membership functions are generated as in Figure 1, but building P collections each of which is made up of a set of triangular or another suitable type of membership functions, defined by a spacing parameter $D_j$ associated to each of the collections, as shown in Figure 3.

The multi-frequency embodiment of the method using several collections of fuzzy subsets allows collecting information about the different absorptions and behaviours present in the spectrum in different frequencies, such that the behaviour of each of the areas of the vectors is modelled more accurately and more detailed information about the form of the absorption can be acquired. However, this approach considerably increases the size of the feature vector in the event that very high frequency information, i.e., information having low spectral range -do not confuse with high frequencies of the spectrum-, is to be added

The implementation of the method using a single collection of fuzzy subsets, with a single spacing parameter small enough to collect the desired frequency information, also allows the information contained in the lower frequency collections, i.e.,. with a larger spacing parameter, to be easily inferred by the classifier using only said collection. This causes the pyramidal and multi-frequency approach to contain redundant information.

In addition, the fact that the absorption phenomenon in the material object of classification is produced in consecutive wavelengths causes the analysis of the Energy of the spectrum in the suitable fuzzy subset to offer information that a certain absorption phenomenon has been produced, as well as information about its position in the fuzzy set in which it is produced, as well as intensity of the absorption produced given by absorption area). This Energy, illustrated in Figure 4, integrates the parameters of the absorption phenomenon in itself, by combining the absorption levels in each of the nearby wavelengths, at the same time as it considerably reduces the noise of the parameters. The absorptions present in the spectrum are thus directly parameterised by the Energy ($S_1$, $S_2$, $S_3$, ...$S_{k-1}$, $S_k$) of one or more associated fuzzy subsets and the Energy of the adjacent fuzzy sets. Furthermore the modelling of the hyperspectral pixels on the basis of Energy allows efficiently reducing the dimensionality of the feature space since it is based on the physical properties of the spectra, making use of the discriminant capacity of the absorption bands and of the correlation between bands.

In this text, the word "comprise" and its variants (such as "comprising", etc.) must not be interpreted exclusively, i.e., they do not exclude the possibility that what is described includes other elements, steps, etc.

**Claims**

1. Method for modelling electromagnetic spectra, wherein a hyperspectral image corresponds to an electromagnetic spectrum and the electromagnetic spectrum is defined by a normalised feature vector ($L_n$) made up of N elements,

$$\mathbf{L}_n = \left\{ L_n(\lambda_1), L_n(\lambda_2), ..., L_n(\lambda_N) \right\}^T$$

N being a number of wavelengths ($\lambda_1$, $\lambda_2$,..., $\lambda_N$) contained in the hyperspectral image and $L_n(\lambda_i)$ an intensity value of the element i, i = 1, 2,..., N, the method **characterised in that** it comprises the following steps:

   i) Dividing the electromagnetic spectrum into at least one collection $L_{Dj}$ of a number $K \leq N$ of fuzzy subsets, a grade of membership to at least one of the fuzzy subsets determined by a membership function $Mf_{ij}$ associated to a central wavelength $\lambda_{Cij}$ and to a spacing parameter $D_j$, j = 1, 2,..., P corresponding to each wavelength ($\lambda_i$), i = 1, 2,..., N, $P \geq 1$ being a total number of collections of fuzzy subsets;

   ii) For each fuzzy subset of each collection $L_{Dj}$, determining an intensity of the electromagnetic spectrum $S_{ij}$ weighting the intensity value $L_n(\lambda_i)$ of the element i with the membership function $Mf_{ij}$ determining the grade of membership of the wavelength $\lambda_i$ to the fuzzy subset;

   iii) For collection $L_{Dj}$, building a feature vector ($L_{Dj}$) made up of K elements, $K \leq N$,

$$\mathbf{L}_{Dj} = \left\{ S_{1j}, S_{2j}, ..., S_{Kj} \right\}^T ;$$

   iv) Building a final feature vector (L) the elements of which are the feature vectors ($L_{Dj}$) built for each collection $L_{Dj}$ in the previous step,

$$\mathbf{L} = \left\{ \mathbf{L}_{D_1} ; \mathbf{L}_{D_2} ; ... \mathbf{L}_{D_P} \right\},$$

   P equal to the total number of collections of fuzzy subsets, $P \geq 1$;

   v) Assigning the final feature vector (L) to the hyperspectral image of the electromagnetic spectrum.

2. Method according to claim 1, **characterised in that** in step i) the membership function $Mf_{ij}$ associated to a central wavelength $\lambda_{Cij}$ and to a spacing parameter $D_j$ is a triangular function of the wavelength $\lambda$ and is calculated according to the expression:

$$Mf_{ij}(\lambda) = \begin{cases} 1 - \left| \dfrac{\lambda - \lambda_{Cij}}{D_j} \right|, & \lambda_{Cij} - D_j < \lambda < \lambda_{Cij} + D_j \\ 0, & \text{rest of values of } \lambda \end{cases}$$

**3.** Method according to claim 1, **characterised in that** in step i) the membership function $Mf_{ij}$ associated to a central wavelength $\lambda_{Cij}$ and to a spacing parameter $D_j$ is a Gaussian function of the wavelength $\lambda$ and is calculated according to the expression:

$$Mf_{ij}(\lambda) = \left( \frac{1}{2\pi\sigma^2} \right)^{\frac{1}{2}} \cdot e^{-\frac{1}{2\sigma^2}(\lambda - \lambda_{Cij})^2}$$

wherein $\sigma = D_j / 2 \cdot$

**4.** Method according to any of the previous claims, **characterised in that** step ii) to determine the intensity of the electromagnetic spectrum $S_{ij}$ additionally comprises calculating

$$S_{ij} = \int_{\lambda=\lambda_1}^{\lambda=\lambda_N} Mf_{ij}(\lambda) \cdot L_n(\lambda) \cdot d\lambda \; .$$

**5.** Method according to any of the previous claims, **characterised in that** the spacing parameter $D_j$ has a value belonging to a range of wavelengths from 10 nanometres to 1000 nanometres.

**6.** Method according to any of the previous claims, **characterised in that** the spacing parameter $D_j$ is variable within one and the same collection $L_{Dj}$.

FIG. 1

FIG. 2

FIG. 3

FIG.4

**Europäisches Patentamt**
**European Patent Office**
**Office européen des brevets**

# EUROPEAN SEARCH REPORT

**Application Number**

EP 08 38 0314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LELAND R P: "Fuzzy multiresolution signal representation" FUZZY SETS AND SYSTEMS, ELSEVIER SCIENCE PUBLISHERS, AMSTERDAM, NL, vol. 130, no. 1, 16 August 2002 (2002-08-16), pages 125-135, XP004368839 ISSN: 0165-0114 * the whole document * | 1-6 | INV. G06K9/64 G06K9/00 |
| X | HSU, P.H.: "Spectral feature extraction of hyperspectral images using wavelet transform" July 2003 (2003-07), NATIONAL CHENG KUNG UNIVERSITY , TAINAN, TAIWAN , XP002534022 Section 2.5.7 Chapters 4 and 5 | 1-6 | |
| X | LORI MANN BRUCE ET AL: "Wavelets for Computationally Efficient Hyperspectral Derivative Analysis" IEEE TRANSACTIONS ON GEOSCIENCE AND REMOTE SENSING, IEEE SERVICE CENTER, PISCATAWAY, NJ, US, vol. 39, no. 7, 1 July 2001 (2001-07-01), XP011021762 ISSN: 0196-2892 * the whole document * | 1-6 | |
| X | PIECH, M.A. AND PIECH, K.R.: "Symbolic representation of hyperspectral data" APPLIED OPTICS, vol. 26, no. 18, 1987, pages 4018-4026, XP002534020 * the whole document * | 1-6 | TECHNICAL FIELDS SEARCHED (IPC) G06K |

-/--

The present search report has been drawn up for all claims

| Place of search | Date of completion of the search | Examiner |
|---|---|---|
| The Hague | 25 June 2009 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 38 0314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 97/12212 A (FRAUNHOFER GES FORSCHUNG [DE]; HAASE NORBERT [DE]; KALZ ANDREAS [DE];) 3 April 1997 (1997-04-03)<br>* page 5, last paragraph *<br>* page 7, last paragraph; figures 1,2 *<br>----- | 1-6 | |
| A | US 5 218 555 A (KOMAI SHIGERU [JP] ET AL) 8 June 1993 (1993-06-08)<br>* abstract; figures 2-12 *<br>----- | 1-6 | |
| A | KONG, S.G. AND CHEN, Y.R. AND KIM, I. AND KIM, M.S.: "Analysis of hyperspectral fluorescence images for poultry skin tumor inspection"<br>APPLIED OPTICS,<br>vol. 43, no. 4, 2004, pages 824-833,<br>XP002534021<br>* the whole document *<br>----- | 1-6 | |
| A | UNSER M: "SPLINES A PERFECT FIT FOR SIGNAL AND IMAGE PROCESSING"<br>IEEE SIGNAL PROCESSING MAGAZINE, IEEE SERVICE CENTER, PISCATAWAY, NJ, US,<br>vol. 16, no. 6,<br>1 November 1999 (1999-11-01), pages 22-38,<br>XP001059038<br>ISSN: 1053-5888<br>Section "Multiresolution Spline Processing"<br>----- | 1-6 | TECHNICAL FIELDS SEARCHED (IPC) |

The present search report has been drawn up for all claims

| Place of search | Date of completion of the search | Examiner |
|---|---|---|
| The Hague | 25 June 2009 | Alecu, Teodor Iulian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 08 38 0314

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2009

| Patent document cited in search report | | Publication date | Patent family member(s) | | Publication date |
|---|---|---|---|---|---|
| WO 9712212 | A | 03-04-1997 | EP<br>US | 0852709 A1<br>5926282 A | 15-07-1998<br>20-07-1999 |
| US 5218555 | A | 08-06-1993 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G.F. Hughes.** On the Mean Accuracy Of Statistical Pattern Recognizers. *IEEE Transactions on Information Theory,* 1968
- **J. Wang ; C.I. Chang.** Independent component analysis-based dimensionality reduction with applications in hyperspectral image analysis. *IEEE Transactions on Geoscience and Remote Sensing,* 2006, vol. 44 (6), 1586-1600
- **Qian Du.** Modified Fisher's Linear Discriminant Analysis for Hyperspectral Imagery. *Geoscience and Remote Sensing Letters, IEEE,* 2007, vol. 4 (4), 503-507
- **J. Wen Chai ; J. Wang ; C.I. Chang.** Mixed principal-component-analysis/independent-component-analysis transform for hyperspectral image analysis. *Optical Engineering,* 2007, vol. 46

- **S. Prasad ; L.M. Bruce.** Limitations of subspace LDA in hyperspectral target recognition applications. *IEEE Geoscience and Remote Sensing Symposium, IGARSS,* 2007
- **L.A. Zadeh.** Fuzzy sets. *Information and Control,* 1965, vol. 8, 338-353
- Mapping Minerals, Amorphous Materials, Environmental Materials, Vegetation, Water, Ice and Snow, and Other Materials: The USGS Tricorder Algorithm. **Clark, R.N. et al.** Summaries of the Fifth Annual JPL Airborne Earth Science Workshop. 23 January 1995, 39-40